(19) Europäisches Patentamt
European Patent Office
Office européen des brevets

(11) **EP 0 564 312 B1**

(12) **FASCICULE DE BREVET EUROPEEN**

(45) Date de publication et mention
de la délivrance du brevet:
**12.02.1997 Bulletin 1997/07**

(51) Int Cl.[6]: **G01M 3/22**

(21) Numéro de dépôt: **93400532.3**

(22) Date de dépôt: **02.03.1993**

(54) **Procédé de détection et de quantification globale de fuites sur au moins une jonction d'une capacité**

Verfahren zum Nachweis und zur globalen Quantisierung von Lecks in wenigstens einer Verbindung eines Behälters

Procedure for detecting and for making a global quantification of leaks in at least one connector of a container

(84) Etats contractants désignés:
**CH DE GB IT LI NL**

(30) Priorité: **04.03.1992 FR 9202585**

(43) Date de publication de la demande:
**06.10.1993 Bulletin 1993/40**

(73) Titulaire: **AEROSPATIALE Société Nationale Industrielle**
**75781 Paris Cédex 16 (FR)**

(72) Inventeur: **Chamonard, Philippe**
**F-78620 l'Etang la Ville (FR)**

(74) Mandataire: **Poulin, Gérard et al**
**Société de Protection des Inventions**
**25, rue de Ponthieu**
**75008 Paris (FR)**

(56) Documents cités:
**US-A- 3 956 923** **US-A- 4 722 219**

- **PATENT ABSTRACTS OF JAPAN vol. 7, no. 241 (P-232)(1386) 26 Octobre 1983 & JP-A-58 129 341 ( MEIDENSHA K.K. ) 2 Août 1983.**
- **PATENT ABSTRACTS OF JAPAN vol. 8, no. 245 (P-312)(1682) 10 Novembre 1984 & JP-A-59 119 234 ( SHIMAZU SEISAKUSHO K.K. ) 10 Juillet 1984.**
- **PATENT ABSTRACTS OF JAPAN vol. 8, no. 23 (P-251)(1460) 31 Janvier 1984 & JP-A-58 179 330 ( SHIMAZU SEISAKUSHO K.K. ) 20 Octobre 1983.**
- **TECHNISCHES MESSEN TM vol. 54, no. 3, 1987, MÜNCHEN DE pages 96 - 99 R. HEINEN 'NEUE GENERATION VON HELIUM-LECKSUCHERN MIT ERWEITERTER DIAGNOSEFÄHIGKEIT'**

EP 0 564 312 B1

## Description

L'invention concerne un procédé permettant de détecter et de quantifier globalement une fuite éventuelle sur une ou plusieurs jonctions d'une capacité destinée à contenir un fluide statique ou en mouvement.

L'invention s'applique quelles que soient la forme et les dimensions de la capacité, c'est-à-dire aussi bien lorsque celle-ci se présente sous la forme d'une tuyauterie ou d'un ensemble de tuyauteries que lorsqu'il s'agit d'un réservoir.

Par ailleurs, le terme "jonction" désigne indifféremment une soudure, un raccord mécanique d'un type quelconque, une vanne, un robinet, ou tout autre appareil actif ou passif placé dans une tuyauterie.

Un tel procédé de détection et de quantification de fuites peut être utilisé dans de nombreux domaines industriels, dès lors qu'il apparaît nécessaire de détecter et de quantifier globalement des fuites de très petites dimensions. Ainsi, ce procédé peut trouver son application, à titre d'exemple, dans les domaines aéronautique et spatial, dans l'industrie nucléaire, dans les industries chimique et pharmaceutique, et dans de nombreux laboratoires.

La plupart des techniques de détection de fuites ou de contrôle d'étanchéité reposent sur l'utilisation d'un gaz traceur que l'on injecte sur une face de la paroi à contrôler, que l'on recueille sur la face opposée lorsque cette paroi présente une fuite, et que l'on envoie sur un appareil sensible au gaz traceur, cet appareil étant constitué par un analyseur de gaz plus ou moins complexe.

Le gaz traceur est choisi de façon à pouvoir être facilement détecté, ce qui suppose qu'il n'est présent qu'en très faibles quantités dans l'air. En outre, il doit pouvoir se glisser dans des fissures aussi petites que possible afin de permettre la détection de celles-ci. Enfin, il est de préférence non toxique et inerte chimiquement. Toutes ces considérations conduisent généralement à utiliser l'hélium comme gaz traceur, mais aussi d'autres gaz (azote, hydrogène, etc.).

Lorsque les capacités dont on désire contrôler l'étanchéité sont des pièces de petites dimensions et fabriquées en grande quantité (microprocesseurs, montres étanches, etc.) le contrôle de l'étanchéité de ces pièces s'effectue par une technique dite de ressuage. Cette technique consiste à placer une certaine quantité des pièces à contrôler dans une enceinte, à l'intérieur de laquelle on injecte le gaz traceur sous une pression de quelques atmosphères. Les pièces à contrôler sont ensuite mises à l'air libre, puis replacées dans une enceinte sous vide reliée cette fois à un détecteur apte à repérer la présence éventuelle de gaz traceur dans l'enceinte. Si tel est le cas, les pièces testées sont considérées globalement comme non étanches et rejetées. Au contraire, les pièces sont acceptées si aucune présence significative de gaz traceur n'est repérée.

Cette technique de contrôle d'étanchéité est clairement limitée à la vérification de capacités de très petites dimensions. De plus, elle n'a pas pour objectif de localiser ni de quantifier les fuites, mais seulement de détecter leur présence. En outre, la sensibilité de l'installation correspondante est relativement faible, notamment en raison du dégazage des parois extérieures des pièces à contrôler.

Lorsque les capacités à contrôler sont de plus grandes dimensions, on est amené à utiliser des techniques différentes qui sont soit des techniques de reniflage, soit des techniques de contrôle à la ventouse, soit des techniques dites d'aspersion.

Selon les techniques de contrôle d'étanchéité d'une capacité par reniflage, on injecte le gaz traceur sous une pression de quelques millibars dans la capacité et l'on recueille éventuellement ce dernier à l'extérieur de la paroi. Pour cela, on utilise une sonde d'aspiration de petite dimension que l'opérateur déplace le long des éléments susceptibles de fuire. La sonde d'aspiration est alors reliée directement à un analyseur apte à détecter le gaz traceur. L'analyseur est placé sous vide secondaire pour assurer son bon fonctionnement. Une pastille poreuse est placée entre l'analyseur et la sonde d'aspiration, afin de préserver le vide.

Cette description montre immédiatement que les techniques de contrôle d'étanchéité par reniflage présentent une sensibilité très faible puisqu'il n'existe aucune étanchéité, même partielle, entre la sonde d'aspiration et l'atmosphère environnante. Cette observation est d'ailleurs confirmée par le fait que le calibrage des appareils est le plus souvent effectué en plaquant la sonde d'aspiration directement dans l'air et en mesurant le gaz traceur qu'il contient, dont la concentration est connue.

De plus, ces techniques sont particulièrement longues à mettre en oeuvre lorsque les endroits susceptibles de fuire sont nombreux et de grandes dimensions. En effet, lors du contrôle d'une jonction telle qu'une soudure ou un raccord, il est nécessaire de déplacer la sonde d'aspiration sur toute la périphérie de cette jonction et aucune quantification globale d'une fuite éventuelle ne peut être réalisée. Le seul intérêt de cette technique réside dans la possibilité de localiser une fuite éventuelle.

Parmi les techniques existantes, on citera aussi la technique de contrôle à la ventouse, qui consiste à remplir de gaz traceur la capacité à contrôler, à appliquer une ventouse de forme adaptée sur une partie de la surface extérieure de la capacité, et à faire le vide à l'intérieur de la ventouse. Cette dernière est reliée à un analyseur qui comprend la cellule d'analyse et une pompe à diffusion ou turbomoléculaire associée à une pompe à palette, permettant d'établir au niveau de la cellule d'analyse un vide secondaire d'environ $10^{-5}$ millibar nécessaire au bon fonctionnement de cette cellule.

A l'inverse de la technique par ressuage, la technique de contrôle à la ventouse permet à la fois de déceler et de mesurer des fuites dans une capacité de grande dimension. De plus, la qualité de la mesure peut être améliorée en effectuant un étalonnage préalable de la cellule d'analyse au moyen d'une fuite calibrée constituée par un petit réservoir laissant échapper un débit connu de gaz traceur, que l'on relie à cette cellule.

Cette technique de contrôle d'étanchéité est cependant limitée par le caractère très r elatif de l'étanchéité entre la ventouse et la paroi de la capacité à contrôler. En effet, le gaz traceur présent dans l'air, même en faible quantité, est également détecté et forme un bruit de fond qui perturbe les mesures pour des valeurs de taux de fuite de la ventouse proches de celles à détecter sur la capacité.

Dans le cas particulier de contrôle de récipients sous pression contenant des aérosols, le document US-A-3 956 923 propose de placer le récipient, ou une partie de celui-ci dans une coquille étanche. On fait ensuite le vide dans la coquille afin d'y recueillir une fraction du gaz contenu dans le récipient, si celui-ci est fuyard. Au bout d'un certain temps, on introduit dans la coquille un gaz porteur tel que de l'air propre, servant ensuite à véhiculer le gaz fuyard jusqu'à un détecteur de fuite. Enfin, on compare le signal délivré par le détecteur à un signal de référence correspondant à une fuite standard acceptable, afin de rejeter ou de garder le récipient.

L'invention a précisément pour objet un procédé de détection de fuites d'un type nouveau, qui s'apparente de façon générale à la technique de la ventouse, mais dont la mise en oeuvre permet d'améliorer de façon notable la sensibilité des mesures effectuées, par rapport à cette technique connue qui est actuellement la plus performante pour les applications ne permettant pas l'utilisation de la technique par ressuage.

Secondairement, l'invention a aussi pour objet un procédé de détection et de quantification de fuites dont la conception originale lui permet d'effectuer de façon particulièrement rapide et à l'échelle industrielle le contrôle d'un nombre relativement important de jonctions sur une capacité donnée, avec une sensibilité non encore atteinte jusqu'à présent, permettant notamment de détecter et de quantifier des fuites inférieures à $10^{-6}$ mb. l/s.

Le premier de ces objectifs est atteint au moyen d'un procédé de détection et de quantification de fuites sur au moins une jonction d'une capacité, selon lequel on applique une coquille sur la jonction, on relie la coquille à une unité de mesure et de pompage par une tuyauterie, on injecte un gaz traceur à l'intérieur de la capacité, on fait le vide dans la coquille, et on effectue une mesure de fuite en détectant une partie du gaz traceur présent dans la capacité et éventuellement aspiré dans la coquille au travers d'une fuite de la jonction, caractérisé en ce que :

- avant d'effectuer la mesure de fuite, on réalise un étalonnage préalable au moyen d'une fuite calibrée reliée à l'unité par la tuyauterie, de façon à affecter à cette fuite calibrée un signal de référence, pour ladite tuyauterie;

- après avoir appliqué la coquille sur la jonction et relié la coquille à l'unité et avant d'injecter le gaz traceur, on fait le vide dans la coquille et on effectue une mesure de bruit de fond en détectant une partie du gaz traceur présent dans l'air et pénétrant éventuellement dans la coquille ;

- après avoir effectué la mesure de fuite, on quantifie une fuite globale éventuelle de la jonction en retranchant la mesure de bruit de fond de la mesure de fuite et en comparant le résultat obtenu au signal de référence.

Selon un premier mode de réalisation de l'invention, on réalise l'étalonnage préalable en appliquant la coquille sur une pièce de référence dépourvue de fuite et en reliant cette coquille à la fuite calibrée.

Selon un deuxième mode de réalisation de l'invention, on réalise l'étalonnage préalable en plaçant la fuite calibrée à la place de la coquille.

Enfin, selon un troisième mode de réalisation de l'invention, on réalise l'étalonnage préalable après avoir appliqué la coquille sur la jonction et après avoir effectué la mesure de bruit de fond, en reliant la coquille à la fuite calibrée.

Afin d'atteindre le second objectif défini précédemment, on utilise avantageusement un système de détection de fuites comportant une coquille adaptée à chacune des jonctions de la capacité, et des moyens de pompage et un moyen de mesure communs reliés à chaque coquille par une tuyauterie séparée. On effectue alors plusieurs étalonnages avec ce système de détection, et on établit les signaux de référence correspondant à des coquilles de différents volumes internes et à des tuyauteries de différentes longueurs reliant les coquilles au moyen de mesure.

Dans ce cas, on effectue ensuite une mesure de bruit de fond et une mesure de fuite pour chacune des coquilles.

Pour faire le vide dans les coquilles, on les isole des moyens de mesure, on crée un premier niveau de vide, de l'ordre de $10^{-3}$ millibar, dans l'ensemble des coquilles et dans les tuyauteries, un niveau de vide intermédiaire, de l'ordre de $10^{-5}$ millibar, en amont du moyen de mesure, et un niveau de vide du moyen de mesure, de l'ordre de $10^{-7}$ millibar, puis on fait communiquer à tour de rôle chacune des coquilles avec le moyen de mesure.

Avantageusement, les différentes mesures sont effectuées à l'aide d'un spectromètre de masse.

Enfin, les coquilles sont avantageusement réalisées en au moins deux parties, que l'on assemble de façon étanche au moyen d'un dispositif de raccordement rapide.

On décrira à présent, à titre d'exemple non limitatif, un mode de réalisation préféré de l'invention, en se référant aux dessins annexés, dans lesquels :

- les figures 1A, 1B et 1C illustrent schématiquement trois étapes du procédé de détection et de quantification de fuites selon un premier mode de réalisation de l'invention ;

- la figure 2 représente plus en détail le système de détection de fuites utilisé dans la mise en oeuvre des trois étapes illustrées sur les figures 1A à 1C ; et
- la figure 3 est une vue en perspective représentant plus en détail l'une des coquilles utilisées dans le système de détection de fuites et les parties du système de détection attenantes à cette coquille.

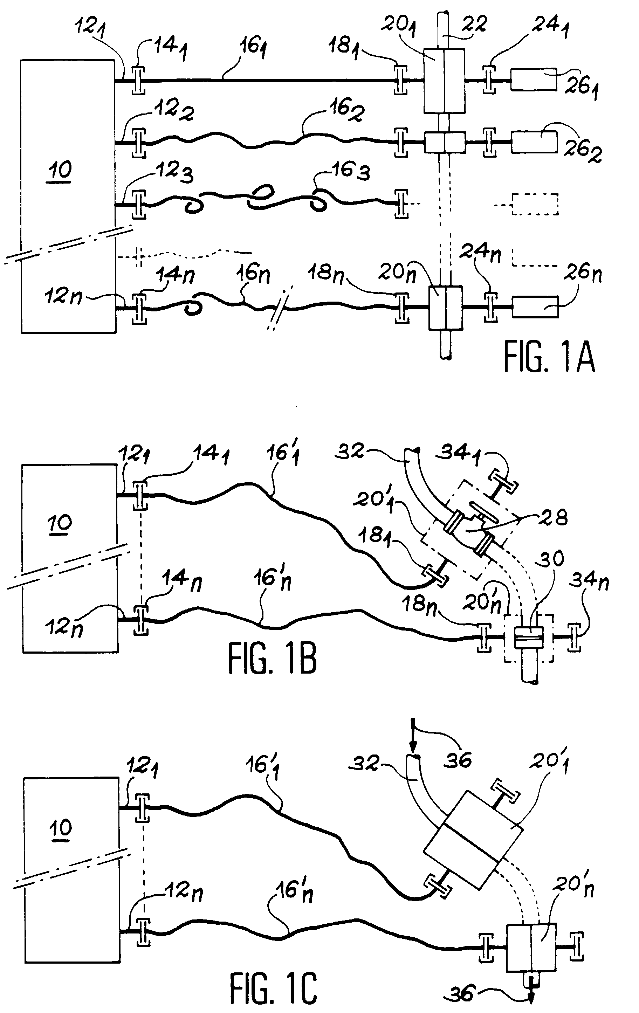

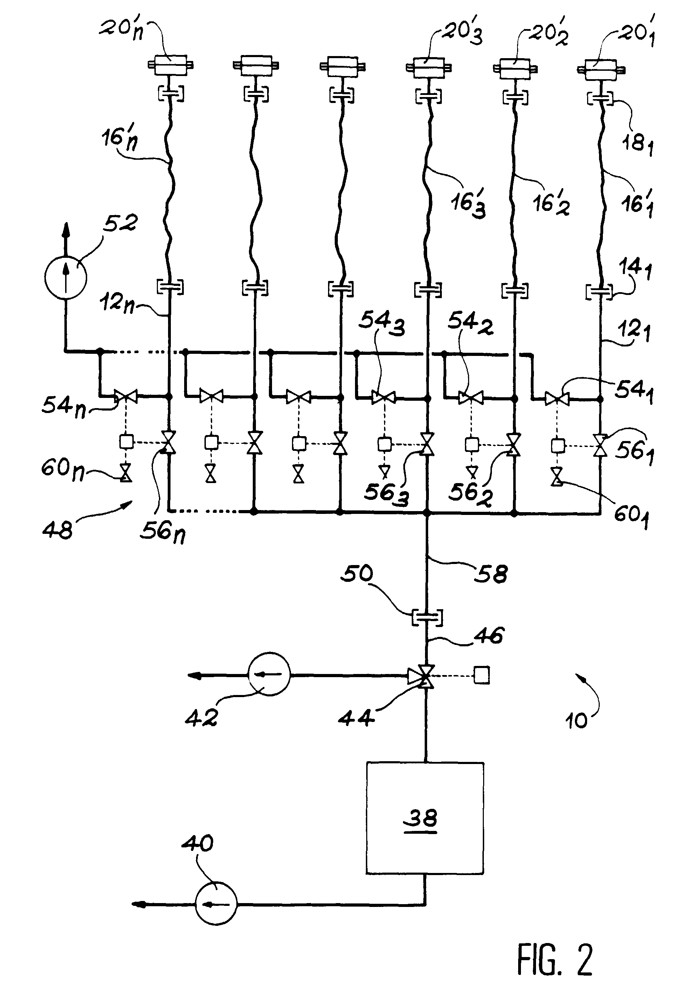

Le procédé de détection et de quantification de fuites conforme à l'invention met en oeuvre une unité de mesure et de pompage 10 qui sera décrite plus en détail par la suite en se référant à la figure 2. Comme l'illustrent très schématiquement les figures 1A à 1C, cette unité 10 de mesure et de pompage présente un nombre $\underline{n}$ de canalisations d'entrée $12_1$ à $12_n$, choisi de façon à être supérieur ou égal au nombre de jonctions que l'on désire contrôler sur la capacité testée.

Selon un premier mode de réalisation de l'invention, le procédé débute par une opération d'étalonnage qui est illustrée schématiquement sur la figure 1A. Cette opération d'étalonnage a pour objectif de déterminer la réponse du moyen de mesure incorporé dans l'unité de mesure et de pompage 10, pour une fuite donnée, lorsqu'on fait varier la longueur de la tuyauterie reliant l'unité 10 à une coquille placée sur une jonction à contrôler et lorsqu'on fait varier le volume intérieur de cette coquille. En d'autres termes, cette opération d'étalonnage permet d'établir des tableaux de données fournissant pour différentes longueurs de tuyauteries et différents volumes internes des coquilles, un signal de référence correspondant à la réponse du moyen de mesure à une fuite calibrée de valeur connue.

Pour effectuer cette opération d'étalonnage préalable, on monte sur une partie au moins des tuyauteries d'entrée $12_1$ à $12_n$, à l'aide de raccords étanches $14_1$ à $14_n$, des tuyauteries $16_1$ à $16_n$ présentant des longueurs différentes, connues, qui se situent dans la gamme de longueurs des tuyauteries qui devront être utilisées ultérieurement pour effectuer les mesures. Ces tuyauteries $16_1$ à $16_n$ sont par ailleurs semblables aux tuyauteries qui seront utilisées ultérieurement pour les mesures, c'est-à-dire qu'elles présentent notamment le même diamètre et les mêmes caractéristiques structurelles que ces dernières.

On relie l'extrémité opposée de chacune des tuyauteries $16_1$ à $16_n$, à l'aide de raccords étanches $18_1$ à $18_n$, à des coquilles $20_1$ à $20_n$ présentant différents volumes intérieurs. Plus précisément, le volume intérieur des coquilles $20_1$ à $20_n$ est situé dans la même gamme de volumes que le volume intérieur des coquilles qui seront utilisées par la suite pour les mesures. En outre, on relie plusieurs coquilles présentant un volume intérieur identique à des tuyauteries de longueurs différentes ainsi que plusieurs coquilles présentant un volume intérieur différent à des tuyauteries de même longueur, afin de pouvoir déterminer séparément l'influence de la longueur de la tuyauterie et l'influence du volume intérieur des coquilles sur les signaux de référence obtenus.

De préférence, on utilise avantageusement pour l'étalonnage les mêmes tuyauteries et les mêmes coquilles que celles qui seront utilisées par la suite pour effectuer les mesures.

Par ailleurs, chacune des coquilles $20_1$ à $20_n$ est montée sur une pièce de référence, dépourvue de fuite. Dans l'exemple de réalisation représenté, cette pièce de référence est constituée par une tuyauterie 22 présentant le ou les mêmes diamètres que la tuyauterie portant les jonctions dont on désire contrôler l'étanchéité. En d'autres termes, la tuyauterie 22 est une tuyauterie semblable à la tuyauterie à tester, mais dépourvue de toute jonction susceptible de créer une fuite.

Chacune des coquilles $20_1$ à $20_n$ comporte une deuxième sortie, comme l'illustre la figure 1A, ou une sortie unique pourvue d'une dérivation, sur laquelle peut être connectée, au moyen d'un raccord étanche $24_1$ à $24_n$, une fuite calibrée $26_1$ à $26_n$. Il peut s'agir de fuites calibrées différentes ou, au contraire, d'une même fuite calibrée montée successivement sur chacune des coquilles $20_1$ à $20_n$.

Lorsque le montage illustré sur la figure 1A est terminé, on met en oeuvre l'unité de mesure et de pompage 10, d'une manière qui sera décrite plus en détail par la suite, de façon à faire le vide dans chacune des coquilles $20_1$ à $20_n$. On met ensuite en communication à tour de rôle chacune des coquilles $20_1$ à $20_n$ avec le moyen de mesure de l'unité 10 et on ouvre la fuite calibrée correspondante $26_1$ à $26_n$, dont la valeur est parfaitement connue. Il est ainsi possible d'établir des tableaux de données fournissant différents signaux de référence correspondant à la réponse du moyen de mesure à une fuite de valeur connue, pour des tuyauteries de différentes longueurs et pour des coquilles de différents volumes intérieurs.

Lorsque ces opérations d'étalonnage sont terminées, on démonte le montage illustré sur la figure 1A et l'on place sur les jonctions de la capacité à contrôler (un robinet 28 et un raccord 30 d'une canalisation 32 sur la figure 1B), les coquilles $20'_1$ à $20'_n$ adaptées à ces jonctions et dont on a vu précédemment qu'elles sont de préférence identiques aux coquilles $20_1$ à $20_n$ utilisées pour effectuer les opérations d'étalonnage. La deuxième sortie de chacune de ces coquilles $20'_1$ à $20'_n$ est obturée par un bouchon $34_1$ à $34_n$. En revanche, la première sortie de chacune des coquilles $20'_1$ à $20'_n$ est reliée aux tuyauteries d'entrée $12_1$ à $12_n$ de l'unité de mesure et de pompage 10 par des tuyauteries $16'_1$ à $16'_n$ dont la longueur dépend de l'emplacement des différentes jonctions à contrôler sur la capacité constituée dans ce cas par la tuyauterie 32.

Comme précédemment, le raccordement des tuyauteries $16'_1$ à $16'_n$ d'une part, sur les tuyauteries d'entrée $12_1$ à $12_n$ et, d'autre part, sur les coquilles $20'_1$ à $20'_n$ est assuré respectivement par des raccords étanches $14_1$ à $14_n$ et $18_1$ à $18_n$.

Lorsque ce montage illustré sur la figure 1B a été réalisé, on effectue sur chacune des coquilles 20'$_1$ à 20'$_n$ une mesure de bruit de fond à l'aide de l'unité de mesure et de pompage 10. Pour effectuer cette mesure, l'intérieur de la capacité constituée par la tuyauterie 32 est maintenue à la pression atmosphérique et aucun gaz traceur n'y est injecté. Dans ces conditions, les mesures qui sont effectuées successivement sur chacune des coquilles permettent essentiellement de déterminer la quantité de gaz traceur présente dans l'air et qui se trouve aspirée à l'intérieur des coquilles, en raison de leur étanchéité imparfaite, lorsque ces coquilles sont placées dans les conditions normales de mesure, c'est-à-dire lorsqu'on y fait le vide à partir de l'unité de mesure et de pompage 10.

Lorsque cette mesure de bruit de fond a été effectuée pour chacune des coquilles 20'$_1$ à 20'$_n$, on effectue les mesures de fuites proprement dites. Pour cela et comme l'illustre schématiquement la figure 1C, aucune modification n'est apportée au montage effectué préalablement pour réaliser les mesures de bruit de fond, mais un gaz traceur tel que de l'hélium est injecté sous pression dans la tuyauterie 32 constituant la capacité qui comporte les jonctions dont on désire détecter et quantifier les fuites. Cette injection d'hélium est schématisée par les flèches 36 sur la figure 1C.

Pour effectuer ces mesures de fuites, on procède de la même manière que précédemment, c'est-à-dire qu'on fait communiquer à tour de rôle chacune des coquilles 20'$_1$ à 20'$_n$ avec le moyen de mesure de l'unité de mesure et de pompage 10, qu'on fait le vide dans la coquille correspondante et qu'on mesure la quantité de gaz traceur éventuellement aspirée à l'intérieur de cette coquille au travers d'une fuite de la jonction sur laquelle est placée la coquille.

Lorsque toutes les mesures de fuites sont terminées, on dispose de tous les éléments pour connaître avec une très grande précision les jonctions éventuellement non étanches et pour quantifier globalement les fuites éventuelles de chaque jonction, dans le cas de fuites égales ou même inférieures à $10^{-6}$ mb.l/s. Pour cela, on calcule pour chacune des jonctions la différence entre la valeur mesurée lors de la mesure de fuite illustrée sur la figure 1C et la valeur mesurée lors de la mesure de bruit de fond illustrée sur la figure 1B. On compare ensuite le résultat obtenu au signal de référence intégrant la longueur de la tuyauterie et le volume de la coquille utilisée pour contrôler cette jonction, en utilisant les tableaux de données obtenus grâce à l'opération d'étalonnage décrite précédemment en se référant à la figure 1A.

Si l'on désigne par $S_R$ ce signal de référence, par $F_E$ la valeur de la fuite étalon correspondant à ce signal et par D la différence calculée entre le signal de mesure et le signal de bruit de fond, on détermine ainsi la fuite réelle $F_R$ en appliquant la formule :

$$F_R = \frac{D \times F_E}{S_R}$$

Cette opération est réalisée au moyen d'un microprocesseur.

On décrira à présent plus en détail la configuration de l'unité de mesure et de pompage 10 utilisée avantageusement dans le procédé de détection et de quantification de fuites conforme à l'invention, en se référant à la figure 2.

Comme l'illustre cette dernière figure, l'unité de mesure et de pompage 10 comprend un moyen de mesure 38 apte à détecter la présence éventuelle de gaz traceur et à quantifier avec une grande précision ce gaz lorsqu'il existe. Dans la pratique, il s'agit de préférence d'un spectromètre de masse capable de détecter et de quantifier tous les éléments qui se trouvent dans l'air résiduel présent dans chacune des coquilles, parmi lesquels se trouve éventuellement le gaz traceur soit en raison d'une étanchéité imparfaite de la coquille, soit parce que la jonction sur laquelle cette dernière est placée n'est pas étanche.

En variante, le moyen de mesure 38 peut aussi être constitué par un détecteur de fuites calé sur la masse du gaz traceur injecté. Cependant, un tel détecteur donne généralement des résultats moins précis qu'un spectromètre de masse.

Afin de placer le moyen de mesure 38 dans des conditions de fonctionnement satisfaisantes, ce moyen de mesure est relié en aval à des moyens de pompage 40 aptes à établir un vide secondaire d'environ $10^{-7}$ millibar. Dans la pratique, ces moyens de pompage 40 comprennent avantageusement une pompe turbomoléculaire associée à une pompe à palette.

Pour la même raison, des moyens de pompage intermédiaires 42 sont branchés en dérivation en amont du moyen de mesure 38, au travers d'une électrovanne 44, sur une tuyauterie d'entrée 46 du moyen de mesure 38. Ces moyens de pompage 42 comprennent également, de préférence, une pompe turbomoléculaire à laquelle est associée une pompe à palette.

L'unité de mesure et de pompage 10 comprend de plus, entre les tuyauteries d'entrée 12$_1$ à 12$_n$ de cette unité et la tuyauterie d'entrée 46 du moyen de mesure 38, en amont de l'électrovanne 44, un dispositif scrutateur 48. Ce dispositif scrutateur 48 peut être relié à la tuyauterie d'entrée 46 par un raccord étanche 50. Il a pour double fonction de permettre la mise sous vide primaire préalable de chacune des coquilles 20'$_1$ à 20'$_n$ (ou 20$_1$ à 20$_n$ lors de l'étape d'étalonnage) et de permettre la mise en communication à tour de rôle de chacune des coquilles avec le moyen de mesure 38.

Afin de remplir la première de ses fonctions, le dispositif scrutateur 48 comporte des premiers moyens de pompage 52, constitués par exemple par une pompe à palette permettant d'établir un vide de l'ordre de $10^{-3}$ millibar. Ces premiers moyens de pompage 52 sont raccordés en dérivation sur chacune des tuyauteries d'entrée $12_1$ à $12_n$ au travers d'une vanne $54_1$ à $54_n$. En aval de ce raccordement, chacune des tuyauteries d'entrée $12_1$ à $12_n$ comporte une deuxième vanne $56_1$ à $56_n$, en aval de laquelle toutes ces tuyauteries d'entrée sont raccordées pour former une tuyauterie unique 58 constituant la tuyauterie de sortie du dispositif scrutateur 48. C'est sur cette tuyauterie de sortie 58 qu'est branchée la tuyauterie d'entrée 46 du moyen de mesure 38, par l'intermédiaire du raccord étanche 50.

Comme on l'a illustré schématiquement sur la figure 2, les deux vannes de chacune des paires de vannes $54_1$ , $56_1$ à $54_n$, $56_n$ sont actionnées simultanément par des organes de commande $60_1$ à $60_n$, de telle sorte que l'ouverture de l'une des vannes s'accompagne de la fermeture de l'autre, et inversement.

Dans la pratique, lorsque le montage de la figure 1A ou le montage des figures 1B et 1C est réalisé, on effectue chacune des trois opérations successives qui doivent être mises en oeuvre dans le procédé de détection et de quantification conforme à l'invention de la manière suivante.

Dans un premier temps, toutes les vannes $56_1$ à $56_n$ sont fermées et toutes les vannes $54_1$ à $54_n$ sont ouvertes. Cela signifie que le moyen de mesure 38 est totalement isolé des coquilles $20'_1$ à $20'_n$ et que ces dernières communiquent au contraire avec les moyens de pompage primaire 52. Les différents moyens de pompage 40, 42 et 52 sont alors mis en oeuvre, de façon à établir dans le moyen de mesure 38 la dépression nécessaire à son fonctionnement et à établir dans chacune des coquilles $20'_1$ à $20'_n$ un vide primaire facilitant la migration du gaz porteur vers le moyen de mesure lorsque les jonctions ne sont pas étanches.

Lorsque les niveaux de vide requis sont établis, on actionne l'un après l'autre chacun des organes de commande $60_1$ à $60_n$, de façon à isoler à tour de rôle chacune des coquilles $20'_1$ à $20'_n$ des premiers moyens de pompage 52 et à mettre cette coquille en communication avec le moyen de mesure 38. Selon qu'on se trouve dans la configuration de la figure 1A, de la figure 1B ou de la figure 1C, on réalise ainsi l'étalonnage, les mesures de bruit de fond ou les mesures de fuites sur chacune des tuyauteries d'entrée de l'unité de mesure et de pompage 10 qui sont opérationnelles dans la configuration concernée.

L'opération d'étalonnage préalable qui a été décrite précédemment en se référant à la figure 1A ne constitue qu'un mode de mise en oeuvre du procédé selon l'invention.

Selon un deuxième mode de mise en oeuvre de ce procédé, les étalonnages sont également réalisés avant les mesures de bruit de fond. Cependant, au lieu de raccorder les fuites calibrées $26_1$, ...$26_n$ sur les coquilles $20_1$, ...$20_n$, on raccorde les fuites calibrées directement sur les tuyauteries $16_1$, ...$16_n$, au moyen des raccords étanches $18_1$, ...$18_n$. Dans ce cas, on extrapole par le calcul les variations des signaux de référence dues aux volumes internes des coquilles.

Selon un troisième mode de mise en oeuvre du procédé, les étalonnages sont effectués sur le montage de la figure 1B, après les mesures de bruit de fond. Lorsque ces mesures sont terminées, on raccorde les fuites calibrées $26_1$, ...$26_n$ directement sur les raccords étanches $24_1$, ...$24_n$ des coquilles, après en avoir retiré les bouchons $34_1$, ...$34_n$. Comme pour les mesures de fuites ultérieures, les valeurs des signaux de référence sont obtenues en retranchant de la réponse du moyen de mesure obtenue lors de l'étalonnage la mesure de bruit de fond effectuée auparavant sur la coquille correspondante.

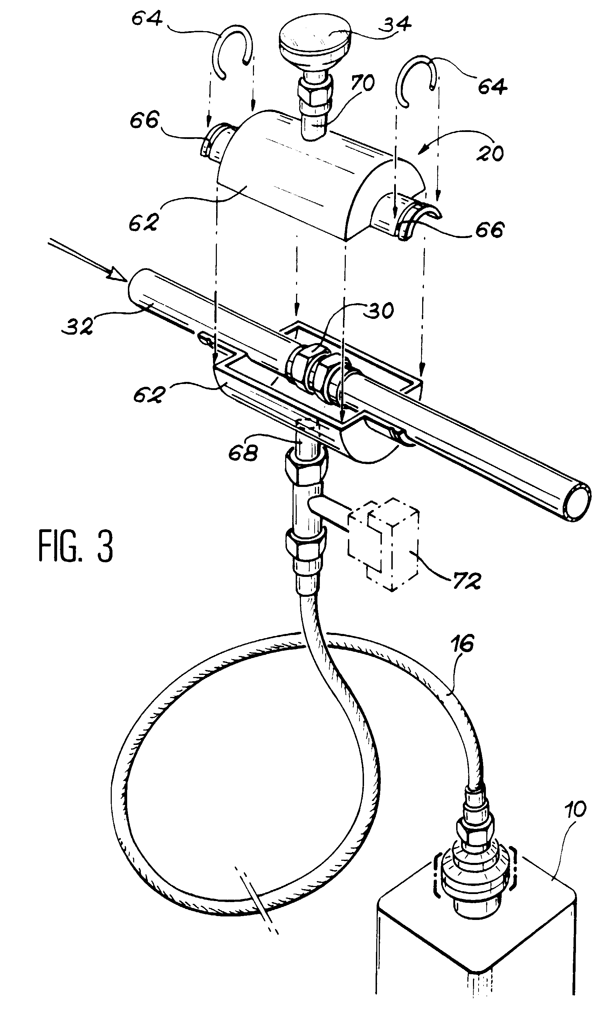

Les coquilles $20'_1$ à $20'_n$ qui sont placées sur les jonctions dont on désire contrôler l'étanchéité peuvent prendre des formes et des dimensions très variées selon la nature de ces jonctions et les dimensions de la capacité sur laquelle elles se trouvent. Comme on l'a illustré à titre d'exemple sur la figure 3, dans le cas d'une coquille désignée par la référence 20, chacune de ces coquilles comprend avantageusement deux demi-coquilles 62 aptes à être appliquées de façon étanche sur la surface extérieure de la capacité constituée dans ce cas par la canalisation 32, autour d'une jonction telle que le raccord 30. Le raccordement des deux demi-coquilles 62 est réalisé par un dispositif de raccordement rapide tel que des joncs élastiques 64 placés dans des gorges 66 formées aux extrémités des demi-coquilles 62. Un tel agencement permet de réaliser rapidement le montage et le démontage des coquilles 20, tout en assurant une étanchéité satisfaisante.

Pour réaliser cette étanchéité, on équipe chacune des demi-coquilles 62 de joints (non représentés) aptes à venir s'appliquer sur la surface extérieure de la canalisation 32 et sur la surface de joint en vis-à-vis de l'autre demi-coquille.

Comme l'illustre la figure 3, l'une des demi-coquilles 62 comporte une sortie 68 sur laquelle est raccordée une tuyauterie souple de liaison 16, alors que l'autre demi-coquille comporte une sortie 70 apte à être obturée par un obturateur 34 ou à être reliée à une fuite calibrée lors de l'étalonnage.

Comme on l'a illustré schématiquement sur la figure 3, une jauge de vide 72 peut être placée entre la sortie 68 et la tuyauterie 16.

Bien entendu, l'invention n'est pas limitée au mode de réalisation qui vient d'être décrit à titre d'exemple, mais en couvre toutes les variantes. Ainsi, si l'invention est particulièrement adaptée à la détection et à la quantification de fuites sur une capacité formée de tuyauteries comportant de multiples jonctions, elle peut aussi être utilisée pour contrôler l'étanchéité d'une capacité comportant une jonction unique ou un nombre limité de jonctions, telle qu'un réservoir. Par ailleurs, dans le cas où la capacité comprend un nombre important de jonctions, le nombre de mesures effectuées lors de l'opération préalable d'étalonnage peut être sensiblement inférieur au nombre de ces jonctions, à condition que ce nombre de mesures soit suffisant pour établir les tableaux de données permettant de comparer les mesures effectuées aux signaux de référence intégrant les longueurs des tuyauteries et les volumes des coquilles. Enfin, il est à noter que le nombre des parties constitutives des coquilles peut, dans certains cas, être supérieur à deux.

## Revendications

1. Procédé de détection et de quantification de fuites sur au moins une jonction (28,30) d'une capacité (32), selon lequel on applique une coquille ($20'_1$, ... $20'_n$) sur la jonction, on relie la coquille à une unité (10) de mesure et de pompage par une tuyauterie ($16_1$, ... $16_n$), on injecte un gaz traceur à l'intérieur de la capacité, on fait le vide dans la coquille, et on effectue une mesure de fuite en détectant une partie du gaz traceur présent dans la capacité et éventuellement aspiré dans la coquille au travers d'une fuite de la jonction, caractérisé en ce que :

   - avant d'effectuer la mesure de fuite, on réalise un étalonnage préalable au moyen d'une fuite calibrée ($26_1$, ... $26_n$) reliée à l'unité (10) par la tuyauterie ($16_1$, ... $16_n$), de façon à affecter à cette fuite calibrée un signal de référence, pour ladite tuyauterie ($16_1$, ... $16_n$);
   - après avoir appliqué la coquille sur la jonction et relié la coquille à l'unité (10) et avant d'injecter le gaz traceur, on fait le vide dans la coquille et on effectue une mesure de bruit de fond en détectant une partie du gaz traceur présent dans l'air et pénétrant éventuellement dans la coquille ;
   - après avoir effectué la mesure de fuite, on quantifie une fuite globale éventuelle de la jonction en retranchant la mesure de bruit de fond de la mesure de fuite et en comparant le résultat obtenu au signal de référence.

2. Procédé selon la revendication 1, caractérisé par le fait qu'on réalise l'étalonnage préalable en appliquant la coquille ($20_1$, ... $20_n$) sur une pièce de référence (22) dépourvue de fuite et en reliant cette coquille à la fuite calibrée ($26_1$, ... $26_n$).

3. Procédé selon la revendication 1, caractérisé par le fait qu'on réalise l'étalonnage préalable en plaçant la fuite calibrée à la place de la coquille ($20_1$, ... $20_n$).

4. Procédé selon la revendication 1, caractérisé par le fait qu'on réalise l'étalonnage préalable après avoir effectué la mesure de bruit de fond, en reliant la coquille à la fuite calibrée ($26_1$, ...$26_n$).

5. Procédé selon l'une quelconque des revendications précédentes, caractérisé par le fait qu'afin de détecter des fuites sur plusieurs jonctions (28,30) d'une capacité, on utilise un système de détection de fuites comportant une coquille ($20'_1$, ...$20_n$) adaptée à chacune des jonctions, et des moyens de pompage (40, 42,52) et un moyen de mesure (38) communs reliés à chaque coquille par une tuyauterie séparée ($16'_1$, ...$16'_n$), on effectue plusieurs étalonnages avec ce système de détection, et on établit les signaux de référence correspondant à des coquilles présentant différents volumes internes et à des tuyauteries ($16'_1$, ...$16'_n$) de différentes longueurs reliant les coquilles au moyen de mesure (38).

6. Procédé selon la revendication 5, caractérisé par le fait qu'on effectue une mesure de bruit de et une mesure de fuite pour chacune des coquilles ($20'_1$, ... $20'_n$).

7. Procédé selon l'une quelconque des revendications 5 et 6, caractérisé par le fait que, pour faire le vide dans les coquilles, on les isole des moyens de mesure, on crée un premier niveau de vide dans l'ensemble des coquilles ($20'_1$, ...$20'_n$) et dans les tuyauteries ($16'_1$, ...$16'_n$), un vide intermédiaire en amont du moyen de mesure (38) et un vide du moyen de mesure (38), puis on fait communiquer à tour de rôle chacune des coquilles avec le moyen de mesure.

8. Procédé selon l'une quelconque des revendications précédentes, caractérisé par le fait qu'on effectue l'étalonnage, les mesures de bruit de fond et les mesures de fuite au moyen d'un spectromètre de masse (38).

9. Procédé selon l'une quelconque des revendications précédentes, caractérisé par le fait qu'on utilise une coquille (20) en au moins deux parties (62), que l'on assemble de façon étanche au moyen d'un dispositif de raccordement rapide (64).

## Patentansprüche

1. Verfahren zum Nachweis und zur Quantifizierung von Lecks in wenigstens einer Verbindung (28,30) eines Behälters (32), nach dem man eine Schale ($20'_1$, ...$20'_n$) auf der Verbindung anbringt, man die Schale verbindet mit einer Meß- und Pumpeinheit (10) mittels einer Leitung ($16_1$ ...$16_n$), man ein Spürbzw. Prüfgas einleitet in das Innere des Behälters, man Vakuum herstellt in der Schale und eine Leckmessung durchführt, indem man einen Teil des in dem Behälter vorhanden und eventuell durch ein Leck der Verbindung in die Schale gesaugten Spürgases detektiert,
**dadurch gekennzeichnet,**

- daß man vor dem Ausführen der Leckmessung eine vorherige Eichung mittels eines kalibrierten Lecks ($26_1$, ...$26_n$) durchführt, das mit der Einheit (10) über eine Leitung ($16_1$, ...$16_n$) verbunden ist, um diesem kalibrierten Leck ein Bezugssignal zuzuteilen;
- daß man nach dem Anbringen der Schale auf der Verbindung und dem Verbinden der Schale mit der Einheit (10) und vor dem Einleiten des Spürgases in der Schale ein Vakuum herstellt, und daß man eine Grundgeräuschmessung durchführt, indem man einen Teil des in der Luft vorhandenen und eventuell in die Schale eindringenden Spürgases detektiert;
- daß man nach dem Ausführen der Leckmessung ein eventuelles globales Leck der Verbindung quantifiziert, indem man die Grundgeräuschmessung von der Leckmessung abzieht und indem man das erhaltene Resultat mit dem Bezugssignal vergleicht.

2. Verfahren nach Anspruch 1, dadurch gekennzeichnet, daß man die vorausgehende Eichung durchführt, indem man die Schale ($20'_1$, ...$20'_n$) auf einem Bezugsteil (22) ohne Leck anbringt und indem man diese Schale mit dem kalibrierten Leck ($26_1$, ...$26_n$) verbindet.

3. Verfahren nach Anspruch 1, dadurch gekennzeichnet, daß man die vorherige Eichung durchführt, indem man das kalibrierte Leck anstelle der Schale ($20'_1$, ...$20'_n$) anbringt.

4. Verfahren nach Anspruch 1, dadurch gekennzeichnet, daß man die vorherige Eichung durchführt nachdem man die Grundgeräuschmessung ausgeführt hat, indem man die Schale mit dem kalibrierten Leck ($26_1$, ...$26_n$) verbindet.

5. Verfahren nach einem der vorangehenden Ansprüche, dadurch gekennzeichnet, daß man zum Detektieren der Lecks an mehreren Verbindungen (28,30) eines Behälters ein Leckdetektionssystem benutzt, umfassend eine an jede der Verbindungen angepaßte Schale ($20'_1$, ...$20'_n$) und Pumpeinrichtungen (40,42,52) und eine gemeinsame Meßeinrichtung (38), mit jeder Schale über eine getrennte Leitung ($16_1$, ...$16_n$) verbunden, daß man mit diesem Detektionssystem mehrere Eichungen durchführt, und daß man die entsprechenden Bezugssignale festlegt bzw. vorsieht, die Schalen mit unterschiedlichen Innenvolumen und Leitungen ($16_1$, ...$16_n$) mit unterschiedlichen Längen entsprechen, die die Schalen mit der Meßeinrichtung (38) verbinden.

6. Verfahren nach Anspruch 5, dadurch gekennzeichnet, daß man für jede der Schalen ($20'_1$, ...$20'_n$) eine Geräuschmessung und eine Leckmessung durchführt.

7. Verfahren nach einem der Ansprüche 5 und 6, dadurch gekennzeichnet, daß man zum Erzeugen des Vakuums in den Schalen diese von den Meßeinrichtungen isoliert bzw. trennt, man in der Gesamtheit der Schalen ($20'_1$, ...$20'_n$) und in den Leitungen ($16_1$, ...$16_n$) eine erste Vakuumstufe herstellt, sowie stromaufwärts von den Meßeinrichtungen (38) ein Zwischenvakuum und in der Meßeinrichtung (38) ein Vakuum, und daß man dann jede der Schalen der Reihe nach mit der Meßeinrichtung kommunizieren läßt.

8. Verfahren nach einem der vorangehenden Ansprüche, dadurch gekennzeichnet, daß man die Eichung, die Grundgeräuschmessungen und die Leckmessungen mittels eines Massenspektrometers (38) durchführt.

9. Verfahren nach einem der vorangehenden Ansprüche, dadurch gekennzeichnet, daß man eine Schale (20) aus wenigstens zwei Teilen (62) benutzt, die man auf dichte Weise zusammenbaut mittels einer Schnellverschlußvorrichtung (64).

**Claims**

1. Method for the detection and quantification of leaks from least at one junction (28, 30) of a container (32), in which method a shell ($20'_1$,...$20'_n$) is put around the junction, the shell is connected via a hose ($16_1$,...16n) to a measuring and pumping unit (10), a tracer gas is injected into the container, a vacuum is created in the shell and a leak measurement is taken by detecting some of the tracer gas present in the container and possibly sucked out into the shell through a leak at the junction, characterized in that:

- before taking the leak measurement, a prior calibration is made by means of a calibrated leak ($26_1$,...$26_n$) connected via the hose ($16_1$,... $16_n$) to the unit (10), so as to assign a reference signal to this calibrated leak, for the said hose ($16_1$,...$16_n$);
- after having put the shell around the junction and connected the shell to the unit (10), and before injecting the tracer gas, a vacuum is created in the shell and a background noise measurement is taken by detecting some of the tracer gas present in the air and possibly penetrating into the shell;
- after having taken the leak measurement, any overall leak from the junction is quantified by subtracting the background noise measurement from the leak measurement and by comparing the result obtained with the reference signal.

2. Method according to Claim 1, characterized in that the prior calibration is made by putting the shell $(20_1,...20_n)$ around a reference component (22) free of any leak and by connecting this shell to the calibrated leak $(26_1,...26_n)$.

3. Method according to Claim 1, characterized in that the prior calibration is made by placing the calibrated leak in place of the shell $(20_1,...20_n)$.

4. Method according to Claim 1, characterized in that the prior calibration is made after having taken the background noise measurement, by connecting the shell to the calibrated leak $(26_1,...26_n)$.

5. Method according to any one of the preceding claims, characterized in that, in order to detect leaks at several junctions (28, 30) of a container, a leak detection system is used which comprises a shell $(20'_1,...20'_n)$, tailored to each of the junctions, and common pumping means (40, 42, 52) and a common measurement means (38), which pumping means and measurement means are connected to each shell via a separate hose $(16'_1,...16'_n)$, several calibrations are made with this detection system and the reference signals corresponding to shells having various internal volumes and to hoses $(16'_1,...16'_n)$ of various lengths connecting the shells to the measurements means (38) are established.

6. Method according to Claim 5, characterized in that a background noise measurement and a leak measurement are made for each of the shells $(20'_1,...20'_n)$.

7. Method according to either of Claims 5 and 6, characterized in that, in order to create a vacuum in the shells, they are isolated from the measurement means, a first level of vacuum is created in all the shells $(20'_1,...20'_n)$ and in the hoses $(16'_1,...16'_n)$, an intermediate vacuum is created upstream of the measurement means (38) and a vacuum is created in the measurement means (38) and then each of the shells are made to communicate in turn with the measurement means.

8. Method according to any one of the preceding claims, characterized in that the calibration, the background noise measurements and the leak measurements are all made by means of a mass spectrometer (38).

9. Method according to any one of the preceding claims, characterized in that use is made of a shell (20), consisting of at least two parts (62), assembled in a sealed manner by means of a quick-connection device (64).

FIG. 1A

FIG. 1B

FIG. 1C

FIG. 2

FIG. 3